# EUROPEAN PATENT SPECIFICATION

(11) **EP 3 605 707 B1**
(45) Date of publication and mention of the grant of the patent: **02.12.2026**
(21) Application number: 18777991.3
(22) Date of filing: 27.03.2018
(51) Int. Cl.: H01M 10/0567, H01G 11/62, H01G 11/64, H01M 4/38, H01M 4/48, H01M 4/58, H01M 4/485, H01M 4/587, H01M 10/052, H01M 10/058, H01M 10/0525, H01M 10/0568

(54) **NONAQUEOUS ELECTROLYTE SOLUTION FOR BATTERY, AND LITHIUM SECONDARY BATTERY**
WASSERFREIE ELEKTROLYTLÖSUNG FÜR BATTERIE UND LITHIUMSEKUNDÄRBATTERIE
SOLUTION ÉLECTROLYTIQUE NON AQUEUSE POUR BATTERIES, ET BATTERIE RECHARGEABLE AU LITHIUM

(30) Priority: 30.03.2017 JP 2017068365
(43) Date of publication of application: 05.02.2020
(73) Proprietor: Mitsui Chemicals, Inc., Tokyo 104-0028 (JP)
(72) Inventor: FUJIYAMA, Satoko, Sodegaura-shi Chiba 299-0265 (JP); SUGAWARA, Kei, Sodegaura-shi Chiba 299-0265 (JP); ONISHI, Hitoshi, Sodegaura-shi Chiba 299-0265 (JP)
(74) Representative: J A Kemp LLP
(86) International application number: PCT/JP2018/012525
(87) International publication number: WO 2018/181369

(56) References cited:
- WO-A1-2011/070964
- WO-A1-2016/009994
- WO-A1-2016/009994
- WO-A1-2016/017809
- WO-A1-2016/190404
- JP-A- 2016 146 341
- JP-A- 2016 184 462
- JP-A- 2016 184 462
- KR-A- 20160 117 961

## Description

### TECHNICAL FIELD

The present disclosure relates to a nonaqueous electrolytic solution for a battery and a lithium secondary battery.

### BACKGROUND ART

In recent years, lithium secondary batteries are widely used in electronic devices such as mobile phones and laptop personal computers, and as power sources for electric cars and electric power storages. Particularly recently, there is a rapidly growing demand for batteries which can be mounted on hybrid cars and electric cars, and which have a high capacity, a high output, and a high energy density.

Lithium secondary batteries include, for example: a positive electrode and a negative electrode, each containing a material capable of absorbing and releasing lithium; and a nonaqueous electrolytic solution for a battery, containing a lithium salt and a nonaqueous solvent.

Examples of positive electrode active materials to be used in the positive electrode include lithium metal oxides such as LiCoO₂, LiMnO₂, LiNiO₂, and LiFePO₄.

As the nonaqueous electrolytic solution for a battery, solutions are used which are obtained by mixing a mixed solvent (nonaqueous solvent) of carbonates, such as ethylene carbonate, propylene carbonate, dimethyl carbonate, and ethyl methyl carbonate, with an Li electrolyte such as LiPF₆, LiBF₄, LiN(SO₂CF₃)₂, or LiN(SO₂CF₂CF₃)₂.

Further, as negative electrode active materials to be used in the negative electrode, metallic lithium, metal compounds (such as simple metals, oxides, and alloys with lithium) capable of absorbing and releasing lithium, and carbon materials are known. In particular, lithium secondary batteries using coke, artificial graphite, and/or natural graphite, which are capable of absorbing and releasing lithium, have been put to practical use.

In order to improve performance of a battery (such as a lithium secondary battery) containing a nonaqueous electrolytic solution for a battery, attempts have been made to incorporate various types of additives into the nonaqueous electrolytic solution for a battery.

For example, a nonaqueous electrolytic solution for a battery which contains at least one of lithium monofluorophosphate or lithium difluorophosphate as an additive is known to be capable of improving storage characteristics of a battery after charging (see, for example, the following Patent Document 1).

Further, a nonaqueous electrolytic solution for a battery which contains lithium bis(oxalato)borate as an additive is known to be capable of improving cycle performance and storage characteristics of a battery (see, for example, the following Patent Document 2).

Patent Document 3 describes a non-aqueous electrolytic solution in which an electrolyte salt is dissolved in a non-aqueous solvent, the electrolyte salt containing: at least one first lithium salt selected from among LiPF₆, LiBF₄, LiN(SO₂F)₂, LiN(SO₂CF₃)₂ and LiN(SO₂C₂F₅); and at least one second lithium salt selected from among lithium salts having an oxalic acid skeleton, lithium salts having a phosphoric acid skeleton and lithium salts having an S=O group, there being at least four first lithium salts and second lithium salts in total.

Patent Document 4 relates to a non-aqueous electrolyte which contains lithium hexafluorophosphate and lithium bis(oxalato)borate and further contains (A) a salt having an F-S bond in the molecule and (B) a salt having a P-F bond in the molecule, except for lithium hexafluorophosphate.

Patent Document 5 relates to an electrolyte composition for a secondary battery which comprises (1) a solvent, (2) a lithium salt containing a lithium hexafluorophosphate, (3) lithium monofluorphosphate, lithium difluorophosphates or a mixture thereof and (4) lithium bis(oxalate)borate.
Patent Document 1: Japanese Patent (JP-B) No. 3439085
Patent Document 2: JP-B No. 3730855
Patent Document 3: WO 2016 009994 A1
Patent Document 4: JP 2016 184462 A
Patent Document 5: KR 2016 0117961 A

### SUMMARY OF INVENTION

### Technical Problem

However, there is a case in which a further reduction in battery resistance after storage is required for conventional nonaqueous electrolytic solutions for batteries, and for conventional batteries.

Accordingly, an object of the present disclosure is to provide: a nonaqueous electrolytic solution for a battery, which allows for a reduction in battery resistance after storage; and a lithium secondary battery using the nonaqueous electrolytic solution for a battery.

### Solution to Problem

Means for solving the above problem are defined in the appended claims.

### Advantageous Effects of Invention

According to the present disclosure, a nonaqueous electrolytic solution for a battery, which allows for a reduction in battery resistance after storage; and a lithium secondary battery using the nonaqueous electrolytic solution for a battery are provided.

### BRIEF DESCRIPTION OF DRAWINGS

FIG 1 is a schematic perspective view showing one example of a laminate type battery, which is one example of a lithium secondary battery according to the present disclosure.
FIG 2 is a schematic sectional view in a thickness direction of a laminate type electrode body to be housed in the laminate type battery shown in FIG 1.
FIG 3 is a schematic sectional view showing one example of a coin type battery, which is another example of the lithium secondary battery according to the present disclosure.

### DESCRIPTION OF EMBODIMENTS

In the present specification, any numerical range indicated using an expression "from * to" represents a range in which numerical values described before and after the "to" are included in the range as a lower limit value and an upper limit value.

In the present specification, the amount of each component in a composition refers, in a case in which a plurality of substances corresponding to each component are present in the composition, to the total amount of the plurality of substances present in the composition, unless otherwise specified.

### [Nonaqueous Electrolytic Solution for Battery]

A nonaqueous electrolytic solution for a battery according to the present disclosure (hereinafter, also simply referred to as "nonaqueous electrolytic solution") comprises:
an additive A that is at least one selected from the group consisting of compounds represented by the following Formula (A);
an additive B that is lithium difluorophosphate;
an additive C that is at least one selected from the group consisting of compounds represented by the following Formula (C); and
an electrolyte that is a lithium salt other than the additive A, the additive B, or the additive C.

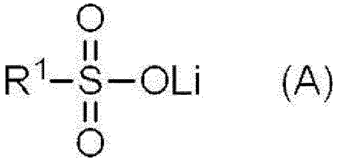

In Formula (A), R¹ represents a hydrocarbon group having from 1 to 6 carbon atoms and substituted with at least one fluorine atom.

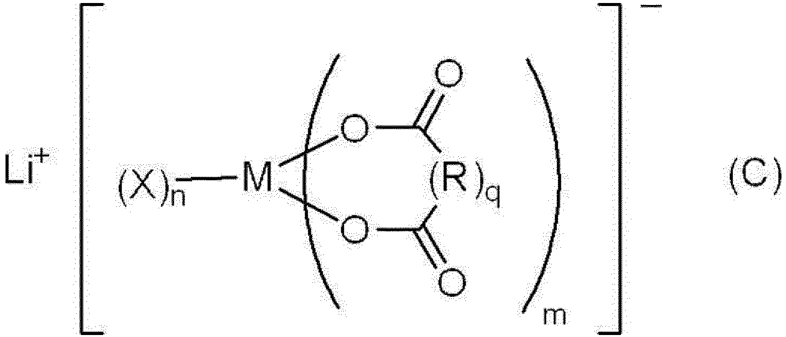

In Formula (C), M represents a boron atom or a phosphorus atom; each X represents a halogen atom; each R represents an alkylene group having from 1 to 10 carbon atoms, a halogenated alkylene group having from 1 to 10 carbon atoms which groups may contain a substituent or a hetero atom within their structure; m represents an integer from 1 to 3; n represents an integer from 0 to 4; and q represents 0 or 1.

The nonaqueous electrolytic solution according to the present disclosure allows for a reduction in battery resistance after storage.

The reason why such an effect can be obtained is not clear. However, it is thought to be because a high-quality coating film, which exhibits a low resistance after the storage of the resulting battery, is formed on electrode surfaces, by combining the additive A, the additive B, and the additive C.

Assumed reasons why the above described effect can be obtained will now be described in further detail.

The additive A is thought to contribute to a reduction in battery resistance before storage (see Example 1 and Comparative Example 3 to be described later).

The additive B is thought to contribute to a reduction in battery resistance before storage (see Example 1 and Comparative Example 2 to be described later).

The additive C is thought to contribute to the prevention of an increase in battery resistance due to storage (see Example 1 and Comparative Example 1 to be described later).

In a battery using the nonaqueous electrolytic solution according to the present disclosure, it is thought that the respective functions of the additive A, the additive B, and the additive C work synergistically to reduce the battery resistance before storage to some extent, and to prevent an increase in the battery resistance due to storage, as a result of which the effect of reducing the battery resistance after storage is achieved.

However, the nonaqueous electrolytic solution according to the present disclosure is not restricted by the assumed reasons described above.

In the nonaqueous electrolytic solution according to the present disclosure, an effect of improving capacity recovery rate of a battery after storage can also be expected.

The respective components of the nonaqueous electrolytic solution according to the present disclosure will be described below.

### < Additive A>

The additive A is at least one selected from the group consisting of compounds represented by the following Formula (A).

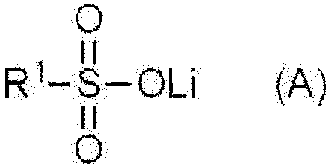

In Formula (A), R¹ represents a hydrocarbon group having from 1 to 6 carbon atoms and substituted with at least one fluorine atom.

The "hydrocarbon group having from 1 to 6 carbon atoms and substituted with at least one fluorine atom" represented by R¹ has a structure in which a non-substituted hydrocarbon group having from 1 to 6 carbon atoms is substituted with at least one fluorine atom.

Examples of the non-substituted hydrocarbon group having from 1 to 6 carbon atoms include: alkyl groups such as methyl group, ethyl group, n-propyl group, isopropyl group, 1-ethylpropyl group, n-butyl group, isobutyl group, sec-butyl group, tert-butyl group, 2-methylbutyl group, 3,3-dimethylbutyl group, n-pentyl group, isopentyl group, neopentyl group, 1-methylpentyl group, n-hexyl group, isohexyl group, sec-hexyl group, and tert-hexyl group; and alkenyl groups such as vinyl group, 1-propenyl group, allyl group, 1-butenyl group, 2-butenyl group, 3-butenyl group, pentenyl group, hexenyl group, isopropenyl group, 2-methyl-2-propenyl group, 1-methyl-2-propenyl group and 2-methyl-1-propenyl group.

Examples of the "hydrocarbon group having from 1 to 6 carbon atoms and substituted with at least one fluorine atom" represented by R¹ include: fluoroalkyl groups such as fluoromethyl group, difluoromethyl group, trifluoromethyl group, 2,2,2-trifluoroethyl group, perfluoroethyl group, perfluoropropyl group, perfluorobutyl group, perfluoropentyl group, perfluorohexyl group, perfluoroisopropyl group and perfluoroisobutyl group; and fluoroalkenyl groups such as 2-fluoroethenyl group, 2,2-difluoroethenyl group, 2-fluoro-2-propenyl group, 3,3-difluoro-2-propenyl group, 2,3-difluoro-2-propenyl group, 3,3-difluoro-2-methyl-2-propenyl group, 3-fluoro-2-butenyl group, perfluorovinyl group, perfluoropropenyl group and perfluorobutenyl group.

The "hydrocarbon group having from 1 to 6 carbon atoms and substituted with at least one fluorine atom" represented by R¹ is preferably an alkyl group substituted with at least one fluorine atom or an alkenyl group substituted with at least one fluorine atom, and more preferably an alkyl group substituted with at least one fluorine atom.

The "hydrocarbon group having from 1 to 6 carbon atoms and substituted with at least one fluorine atom" represented by R¹ is required to be substituted with at least one fluorine atom, and is preferably a perfluorohydrocarbon group.

The "hydrocarbon group having from 1 to 6 carbon atoms and substituted with at least one fluorine atom" represented by R¹ preferably has from 1 to 3 carbon atoms, more preferably 1 or 2 carbon atoms, and particularly preferably 1 carbon atom.

R¹ is a hydrocarbon group having from 1 to 6 carbon atoms and substituted with at least one fluorine atom, preferably an alkyl group having from 1 to 6 carbon atoms and substituted with at least one fluorine atom, more preferably a perfluoroalkyl group having from 1 to 6 carbon atoms, still more preferably a perfluoromethyl group (also referred to as trifluoromethyl group) or a perfluoroethyl group (also referred to as pentafluoroethyl group), and particularly preferably a perfluoromethyl group (also referred to as trifluoromethyl group).

The nonaqueous electrolytic solution preferably contains, as the compound represented by Formula (A), lithium trifluoromethanesulfonate (also referred to as: lithium trifluoromethylsulfonate) or lithium pentafluoroethanesulfonate (also referred to as lithium pentafluoroethylsulfonate), and particularly preferably lithium trifluoromethanesulfonate.

The content of the additive A is 0.1% by mass to 2.0% by mass, and preferably from 0.1% by mass to 1.0% by mass, with respect to the total amount of the nonaqueous electrolytic solution.

### < Additive B >

The additive B is lithium difluorophosphate (LiPO₂F₂).

The nonaqueous electrolytic solution contains lithium difluorophosphate as the additive B.

The content of the additive B is 0.1 to 2.0% by mass, and preferably from 0.1 to 1.0% by mass, with respect to the total amount of the nonaqueous electrolytic solution.

The ratio of the content mass of the additive A relative to the content mass of the additive B (namely, a content mass ratio [additive A/ additive B]) is preferably from 0.1 to 2.0, more preferably from 0.1 to 1.0, still more preferably 0.1 or more but less than 1.0, yet still more preferably from 0.2 to 0.8, and yet still more preferably from 0.3 to 0.7, from the viewpoint of allowing the effect of the nonaqueous electrolytic solution according to the present disclosure to be exhibited more effectively.

### < Additive C >

The additive C is at least one selected from the group consisting of compounds represented by the following Formula (C).

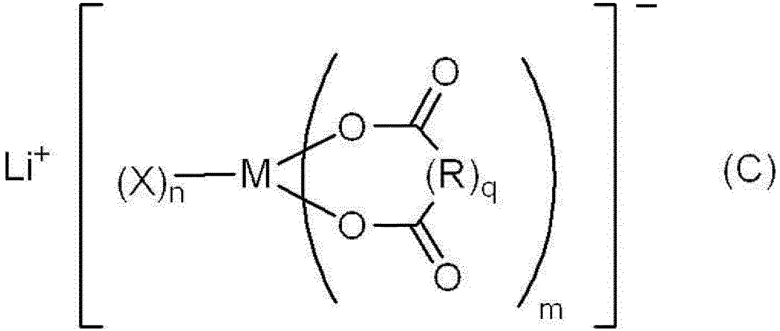

In Formula (C), M represents a boron atom or a phosphorus atom; each X represents a halogen atom; each R represents an alkylene group having from 1 to 10 carbon atoms, a halogenated alkylene group having from 1 to 10 carbon atoms, (these groups may contain a substituent or a hetero atom within the structure); m represents an integer from 1 to 3; n represents an integer from 0 to 4; and q represents 0 or 1.

Specific examples of the halogen atom represented by X in Formula (C) include fluorine atom, chlorine atom, bromine atom, and iodine atom. Among these, fluorine atom is particularly preferred.

In Formula (C), each R represents an alkylene group having from 1 to 10 carbon atoms or a halogenated alkylene group having from 1 to 10 carbon atoms.

These groups (namely, an alkylene group having from 1 to 10 carbon atoms and a halogenated alkylene group having from 1 to 10 carbon atoms) represented by R, may contain a substituent or a hetero atom within the structure.

Specifically, these groups may contain, as a substituent, a halogen atom, a linear or cyclic alkyl group, an aryl group, an alkenyl group, an alkoxy group, an aryloxy group, a sulfonyl group, an amino group, a cyano group, a carbonyl group, an acyl group, an amide group, or a hydroxyl group, instead of a hydrogen atom in each of these groups.

Further, these groups may have a structure in which a nitrogen atom, a sulfur atom, or an oxygen atom is introduced as a hetero atom, instead of a carbon element in each of these groups.

In a case in which q is 1 and m is from 2 to 4, m Rs may be bound to each other. Examples of such a case include a ligand such as ethylenediaminetetraacetic acid.

The alkylene group having from 1 to 10 carbon atoms, represented by R, preferably has from 1 to 6 carbon atoms, more preferably from 1 to 3 carbon atoms, and particularly preferably 1 carbon atom. It is noted that an alkylene group having 1 carbon atom is methylene group (namely, -CH₂- group).

The halogenated alkylene group having from 1 to 10 carbon atoms, represented by R, refers to a group obtained by substituting at least one hydrogen atom contained in an alkylene group having from 1 to 10 carbon atoms with a halogen atom (such as a fluorine atom, a chlorine atom, a bromine atom, or an iodine atom, preferably a fluorine atom).

The halogenated alkylene group having from 1 to 10 carbon atoms preferably has from 1 to 6 carbon atoms, more preferably from 1 to 3 carbon atoms, and particularly preferably 1 carbon atom.

R is preferably an alkylene group having from 1 to 10 carbon atoms, more preferably an alkylene group having from 1 to 6 carbon atoms, still more preferably an alkylene group having from 1 to 3 carbon atoms, and particularly preferably an alkylene group having 1 carbon atom (namely, methylene group).

In Formula (C), m represents an integer from 1 to 3; n represents an integer from 0 to 4; and q represents 0 or 1.

A compound in which q in Formula (C) is 0 is specifically an oxalato compound represented by the following Formula (C2).

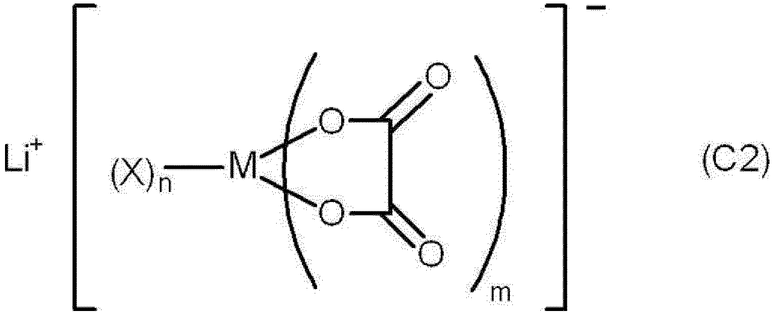

In Formula (C2), the definitions of M, X, m, and n are the same as the definitions of M, X, m, and n in Formula (C), respectively.

Specific examples of the compound represented by Formula (C) (including the case in which the compound is a compound represented by Formula (C2); the same shall apply hereinafter) include:
oxalato compounds (compounds in which q is 0) such as
lithium difluorobis(oxalato)phosphate,
lithium tetrafluoro(oxalato)phosphate,
lithium tris(oxalato)phosphate,
lithium difluoro(oxalato)borate, and
lithium bis(oxalato)borate; and
malonate compounds (compounds in which q is 1, and R is a methylene group) such as lithium difluorobis(malonate)phosphate,
lithium tetrafluoro(malonate)phosphate,
lithium tris(malonate)phosphate,
lithium difluoro(malonate)borate, and
lithium bis(malonate)borate.

The nonaqueous electrolytic solution preferably contains, as the compound represented by Formula (C), at least one selected from the group consisting of lithium difluorobis(oxalato)phosphate, lithium tetrafluoro(oxalato)phosphate, lithium difluoro(oxalato)borate, and lithium bis(oxalato)borate; more preferably contains at least one selected from the group consisting of lithium bis(oxalato)borate and lithium difluoro(oxalato)borate; and particularly preferably contains lithium bis(oxalato)borate (hereinafter, sometimes referred to as "LiBOB").

The content of the additive C is 0.1% by mass to 2.0% by mass, and preferably from 0.1% by mass to 1.0% by mass, with respect to the total amount of the nonaqueous electrolytic solution.

The ratio of the content mass of the additive C relative to the content mass of the additive B (namely, the content mass ratio [additive C/additive B]) is preferably from 0.1 to 2.0, more preferably from 0.1 to 1.0, still more preferably from 0.1 or more but less than 1.0, yet still more preferably from 0.2 to 0.8, and yet still more preferably from 0.3 to 0.7, from the viewpoint of allowing the effect of the nonaqueous electrolytic solution according to the present disclosure to be exhibited more effectively.

The total content of the additive A, the additive B, and the additive C is preferably from 0.3% by mass to 5% by mass and more preferably from 0.3 to 3% by mass, with respect to the total amount of the nonaqueous electrolytic solution.

### < Electrolyte >

The nonaqueous electrolytic solution according to the present disclosure contains an electrolyte which is a lithium salt (hereinafter, also referred to as "specific lithium salt") other than the additive A, the additive B, or the additive C.

The specific lithium salt as an electrolyte may be only one kind, or a combination of two or more kinds thereof.

Specific examples of the specific lithium salt include lithium salts such as LiPF₆, LiBF₄, LiClO₄, LiAsF₆, Li₂SiF₆, and LiPFₙ[CₖF_{(2k + 1)}]₍₆₋ₙ₎ (wherein n represents an integer from 1 to 5; and k represents an integer from 1 to 8).

It is also possible to use any of lithium salts represented by the following Formulae.

LiC(SO₂R²⁷)(SO₂R²⁸)(SO₂R²⁹), LiN(SO₂OR³⁰)(SO₂OR³¹), and LiN(SO₂R³²)(SO₂R³³) (wherein R²⁷ to R³³ may be the same as, or different from, each other, and each represents a perfluoroalkyl group having from 1 to 8 carbon atoms). These electrolytes may be used singly, or as a mixture of two or more kinds thereof.

The specific lithium salt preferably contains at least one of LiPF₆ or LiBF₄, and more preferably contains LiPF₆.

In a case in which the specific lithium salt contains LiPF₆, the ratio of LiPF₆ in the specific lithium salt is preferably from 10% by mass to 100% by mass, more preferably from 50% by mass to 100% by mass, and particularly preferably from 70% by mass to 100% by mass.

The electrolyte is preferably contained in the nonaqueous electrolytic solution at a concentration of from 0.1 mol/L to 3 mol/L, and more preferably from 0.5 mol/L to 2 mol/L.

### < Additive D >

The nonaqueous electrolytic solution according to the present disclosure may contain an additive D.

The additive D is at least one selected from the group consisting of compounds represented by the following Formula (D).

In general, a battery using a nonaqueous electrolytic solution containing the additive D tends to have a higher battery resistance.

However, in a case in which the nonaqueous electrolytic solution according to the present disclosure contains the additive D, the combination of the additives A to C exhibits the effect of reducing the battery resistance after storage, compared to the battery resistance before storage.

Therefore, in a case in which the nonaqueous electrolytic solution according to the present disclosure contains the additive D, the electrolytic solution exhibits the effect of reducing the battery resistance after storage, despite being a nonaqueous electrolytic solution containing the additive D.

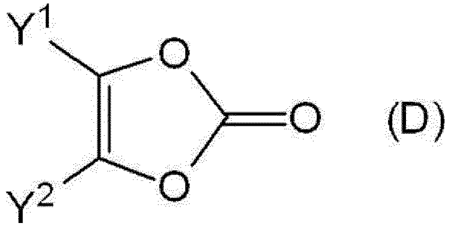

In Formula (D), each of Y¹ and Y² independently represents a hydrogen atom, a methyl group, an ethyl group, or a propyl group.

Examples of the compound represented by Formula (D) include vinylene carbonate, methylvinylene carbonate, ethylvinylene carbonate, propylvinylene carbonate, dimethylvinylene carbonate, diethylvinylene carbonate, and dipropylvinylene carbonate. Among these, vinylene carbonate is most preferred.

In a case in which the nonaqueous electrolytic solution according to the present disclosure contains the additive D, the content of the additive D is preferably from 0.001% by mass to 10% by mass, more preferably from 0.001% by mass to 5.0% by mass, still more preferably from 0.001% by mass to 3.0% by mass, yet still more preferably from 0.01% by mass to 3.0% by mass, yet still more preferably from 0.1% by mass to 3.0% by mass, yet still more preferably from 0.1% by mass to 2.0% by mass, and particularly preferably from 0.1% by mass to 1.0% by mass, with respect to the total amount of the nonaqueous electrolytic solution.

In a case in which the nonaqueous electrolytic solution according to the present disclosure contains the additive D, the ratio of the content mass of the additive D relative to the content mass of the additive B (namely, the content mass ratio [additive D/ additive B]) is preferably from 0.1 to 2.0, more preferably from 0.1 to 1.0, still more preferably from 0.1 or more but less than 1.0, and yet still more preferably from 0.1 to 0.5, from the viewpoint of allowing the effect of the nonaqueous electrolytic solution according to the present disclosure to be exhibited more effectively.

### < Additive E >

The nonaqueous electrolytic solution according to the present disclosure can contain, as an additive E, at least one selected from the group consisting of compounds represented by the following Formula (I).

The compounds represented by Formula (I) are cyclic sulfuric acid esters, as shown below.

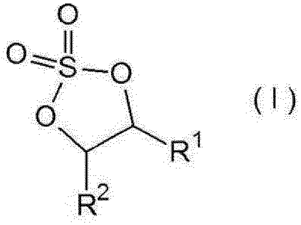

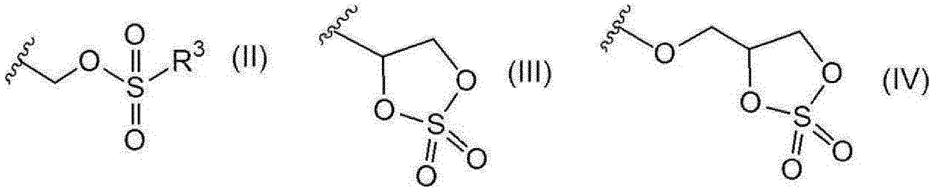

In Formula (I), each of R¹ and R² independently represents a hydrogen atom, an alkyl group having from 1 to 6 carbon atoms, a phenyl group, a group represented by Formula (II), or a group represented by Formula (III); or alternatively, R¹ and R² together represent a group in which R¹ and R² form a benzene ring or a cyclohexyl ring, along with the carbon atom to which R¹ is bound and the carbon atom to which R² is bound.

In Formula (II), R³ represents a halogen atom, an alkyl group having from 1 to 6 carbon atoms, a halogenated alkyl group having from 1 to 6 carbon atoms, an alkoxy group having from 1 to 6 carbon atoms, or a group represented by Formula (IV). A wavy line in each of Formula (II), Formula (III), and Formula (IV) represents a binding position.

In a case in which the compound represented by Formula (I) contains two groups represented by Formula (II), the two groups represented by Formula (II) may be the same as, or different from, each other.

Specific examples of the "halogen atom" in Formula (II) include fluorine atom, chlorine atom, bromine atom, and iodine atom.

The halogen atom is preferably fluorine atom.

In Formulae (I) and (II), the "alkyl group having from 1 to 6 carbon atoms" refers to a linear or branched alkyl group having from 1 to 6 carbon atoms. Specific examples thereof include: methyl group, ethyl group, propyl group, isopropyl group, butyl group, isobutyl group, sec-butyl group, tert-butyl group, pentyl group, 2-methylbutyl group, 1-methylpentyl group, neopentyl group, 1-ethylpropyl group, hexyl group, and 3,3-dimethylbutyl group.

The alkyl group having from 1 to 6 carbon atoms is more preferably an alkyl group having from 1 to 3 carbon atoms.

In Formula (II), the "halogenated alkyl group having from 1 to 6 carbon atoms" refers to a linear or branched halogenated alkyl group having from 1 to 6 carbon atoms. Specific examples thereof include fluoromethyl group, difluoromethyl group, trifluoromethyl group, 2,2,2-trifluoroethyl group, perfluoroethyl group, perfluoropropyl group, perfluorobutyl group, perfluoropentyl group, perfluorohexyl group, perfluoroisopropyl group, perfluoroisobutyl group, chloromethyl group, chloroethyl group, chloropropyl group, bromomethyl group, bromoethyl group, bromopropyl group, iodomethyl group, iodoethyl group, and iodopropyl group.

The halogenated alkyl group having from 1 to 6 carbon atoms is more preferably a halogenated alkyl group having from 1 to 3 carbon atoms.

In formula (II), the "alkoxy group having from 1 to 6 carbon atoms" refers to a linear or branched alkoxy group having from 1 to 6 carbon atoms. Specific examples thereof include methoxy group, ethoxy group, propoxy group, isopropoxy group, butoxy group, isobutoxy group, sec-butoxy group, tert-butoxy group, pentyloxy group, 2-methylbutoxy group, 1-methylpentyloxy group, neopentyloxy group, 1-ethylpropoxy group, hexyloxy group, and 3,3-dimethylbutoxy group.

The alkoxy group having from 1 to 6 carbon atoms is more preferably an alkoxy group having from 1 to 3 carbon atoms.

A preferred embodiment of Formula (I) is an embodiment in which R¹ is a group represented by Formula (II) (wherein in Formula (II), R³ is preferably a fluorine atom, an alkyl group having from 1 to 3 carbon atoms, a halogenated alkyl group having from 1 to 3 carbon atoms, an alkoxy group having from 1 to 3 carbon atoms, or a group represented by Formula (IV)) or a group represented by Formula (III), and R² is a hydrogen atom, an alkyl group having from 1 to 3 carbon atoms, a group represented by Formula (II), or a group represented by Formula (III); or alternatively, R¹ and R² together represent a group in which R¹ and R² form a benzene ring or a cyclohexyl ring, along with the carbon atom to which R¹ is bound and the carbon atom to which R² is bound.

R² in Formula (I) is more preferably a hydrogen atom, an alkyl group having from 1 to 3 carbon atoms, a group represented by Formula (II) (wherein in Formula (II), R³ is still more preferably a fluorine atom, an alkyl group having from 1 to 3 carbon atoms, a halogenated alkyl group having from 1 to 3 carbon atoms, an alkoxy group having from 1 to 3 carbon atoms, or a group represented by Formula (IV)), or a group represented by Formula (III), and still more preferably a hydrogen atom or a methyl group.

In a case in which R¹ in Formula (I) is a group represented by Formula (II), R³ in Formula (II) is a halogen atom, an alkyl group having from 1 to 6 carbon atoms, a halogenated alkyl group having from 1 to 6 carbon atoms, an alkoxy group having from 1 to 6 carbon atoms, or a group represented by Formula (IV), as described above. However, R³ is more preferably a fluorine atom, an alkyl group having from 1 to 3 carbon atoms, a halogenated alkyl group having from 1 to 3 carbon atoms, an alkoxy group having from 1 to 3 carbon atoms, or a group represented by Formula (IV). R³ is still more preferably a fluorine atom, a methyl group, an ethyl group, a trifluoromethyl group, a methoxy group, ethoxy group, or a group represented by Formula (IV).

In a case in which R² in Formula (I) is a group represented by Formula (II), preferred examples of R³ in Formula (II) are the same as the preferred examples of R³ in a case in which R¹ in Formula (I) is a group represented by Formula (II).

A preferred combination of R¹ and R² in Formula (I) is a combination in which R¹ is a group represented by Formula (II) (wherein in Formula (II), R³ is preferably a fluorine atom, an alkyl group having from 1 to 3 carbon atoms, a halogenated alkyl group having from 1 to 3 carbon atoms, an alkoxy group having from 1 to 3 carbon atoms, or a group represented by Formula (IV)) or a group represented by Formula (III); and R² is a hydrogen atom, an alkyl group having from 1 to 3 carbon atoms, a group represented by Formula (II) (wherein in Formula (II), R³ is preferably a fluorine atom, an alkyl group having from 1 to 3 carbon atoms, a halogenated alkyl group having from 1 to 3 carbon atoms, an alkoxy group having from 1 to 3 carbon atoms, or a group represented by Formula (IV)), or a group represented by Formula (III).

A more preferred combination of R¹ and R² in Formula (I) is a combination in which R¹ is a group represented by Formula (II) (wherein in Formula (II), R³ is preferably a fluorine atom, a methyl group, an ethyl group, a trifluoromethyl group, a methoxy group, an ethoxy group, or a group represented by Formula (IV)) or a group represented by Formula (III); and R² is a hydrogen atom or a methyl group.

Examples of the compound represented by Formula (I) include catechol sulfate, 1,2-cyclohexyl sulfate, and compounds represented by the following example compounds 1 to 30. It is noted, however, that the compound represented by Formula (I) is not limited to these compounds.

In the structures of the following example compounds, "Me" represents a methyl group, "Et" represents an ethyl group, "Pr" represents a propyl group, "iPr" represents an isopropyl group, "Bu" represents a butyl group, "tBu" represents a tertiary butyl group, "Pent" represents a pentyl group, "Hex" represents a hexyl group, "OMe" represents a methoxy group, "OEt" represents an ethoxy group, "OPr" represents a propoxy group, "OBu" represents a butoxy group, "OPent" represents a pentyloxy group, and "OHex" represents a hexyloxy group. The "wavy line" in each of R¹ to R³ represents a binding position.

It is noted that stereoisomers derived from the substituents at the 4- and 5- positions of 2,2-dioxo-1,3,2-dioxathiolane ring may occur, both of which are compounds included in the present disclosure.

In a case in which any of sulfuric acid ester compounds represented by Formula (I) contain two or more asymmetric carbons within a molecule, stereoisomers (diastereomers) exist for each of such compounds. In this case, the definition of each compound refers to a mixture of corresponding diastereomers, unless otherwise specified.

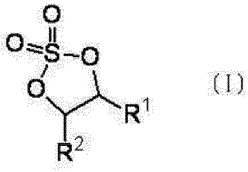

| Example compound No. | R¹ | R² | R³ |
|---|---|---|---|
| 1 | 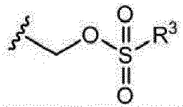 | H | Me |
| 2 | 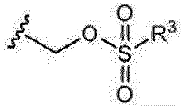 | H | Et |
| 3 | 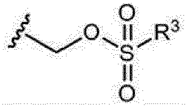 | H | Pr |
| 4 | 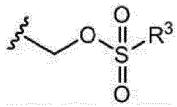 | H | iPr |
| 5 | 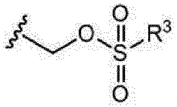 | H | Bu |
| 6 | 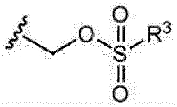 | H | tBu |
| 7 | 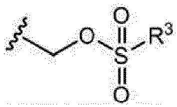 | H | Pent |
| 8 | 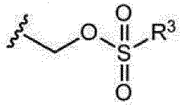 | H | Hex |
| 9 | 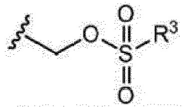 | H | CF₃ |
| 10 | 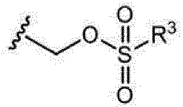 | H | CHF₂ |

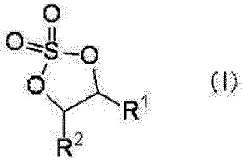

| Example compound No. | R¹ | R² | R³ |
|---|---|---|---|
| 11 | 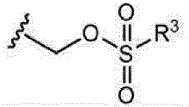 | H | CH₂CF₃ |
| 12 | 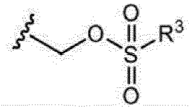 | H | CH₂CH₂CF₃ |
| 13 | 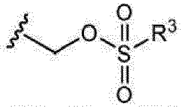 | H | CH₂CH₂CH₂CF₃ |
| 14 | 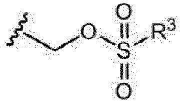 | H | CH₂CH₂CH₂CH₂CF₃ |
| 15 | 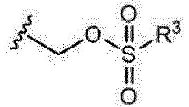 | H | CH₂CH₂CH₂CH₂CH₂CF₃ |
| 16 | 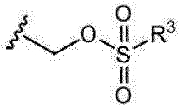 | H | 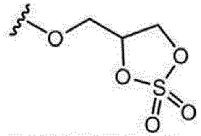 |
| 17 | 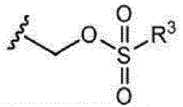 | Me | Me |
| 18 | 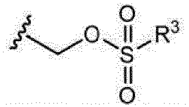 | Et | Me |
| 19 | 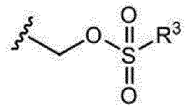 | Hex | Me |
| 20 | 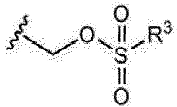 | 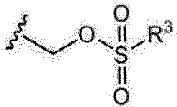 | Me |

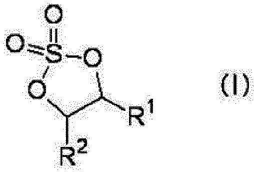

| Example compound No. | R¹ | R² | R³ |
|---|---|---|---|
| 21 | 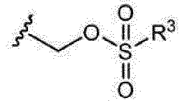 | 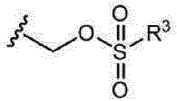 | Et |
| 22 | 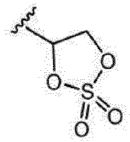 | H | - |
| 23 | 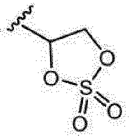 | 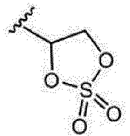 | - |
| 24 | 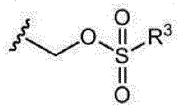 | H | F |
| 25 | 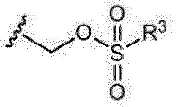 | H | OMe |
| 26 | 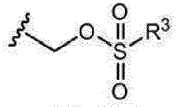 | H | OEt |
| 27 | 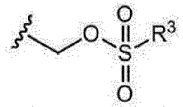 | H | OPr |
| 28 | 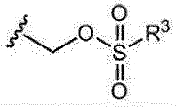 | H | OBu |
| 29 | 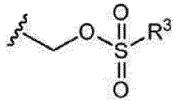 | H | OPent |
| 30 | 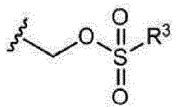 | H | OHex |

In a case in which any of the compounds represented by Formula (I) contain two or more asymmetric carbons within the molecule, stereoisomers (diastereomers) exist for each of such compounds. In this case, the definition of each compound refers to a mixture of corresponding diastereomers, unless otherwise specified.

The method of synthesizing the compound represented by Formula (I) is not particularly limited, and the compound can be synthesized, for example by the synthesis method described in paragraphs from 0062 to 0068 in WO 2012/053644.

In a case in which the nonaqueous electrolytic solution according to the present disclosure contains the additive E, the content of the additive E is preferably from 0.001% by mass to 10% by mass, more preferably from 0.001% by mass to 5.0% by mass, still more preferably from 0.001% by mass to 3.0% by mass, yet still more preferably from 0.01% by mass to 3.0% by mass, yet still more preferably from 0.1% by mass to 3.0% by mass, yet still more preferably from 0.1% by mass to 2.0% by mass, and particularly preferably from 0.1% by mass to 1.0% by mass, with respect to the total amount of the nonaqueous electrolytic solution.

### < Nonaqueous Solvent >

The nonaqueous electrolytic solution generally contains a nonaqueous solvent.

The nonaqueous solvent can be selected as appropriate from various types of known nonaqueous solvents. However, it is preferred to use at least one selected from a cyclic aprotic solvent or a linear aprotic solvent.

When it is intended to achieve an improvement in flash point of a solvent in order to improve battery safety, it is preferred to use a cyclic aprotic solvent as the nonaqueous solvent.

### (Cyclic Aprotic Solvent)

As the cyclic aprotic solvent, it is possible to use a cyclic carbonate, a cyclic carboxylic acid ester, a cyclic sulfone, and/or a cyclic ether.

The cyclic aprotic solvent may be used singly, or as a mixture of a plurality of kinds thereof.

A mixing ratio of the cyclic aprotic solvent in the nonaqueous solvent is from 10% by mass to 100% by mass, more preferably from 20% by mass to 90% by mass, and particularly preferably from 30% by mass to 80% by mass. When the mixing ratio is adjusted within the above described range, it is possible to increase conductivity of the electrolytic solution, which is related to charge-discharge characteristics of the resulting battery.

Specific examples of the cyclic carbonate include ethylene carbonate, propylene carbonate, 1,2-butylene carbonate, 2,3-butylene carbonate, 1,2-pentylene carbonate and 2,3-pentylene carbonate. Among these, ethylene carbonate and propylene carbonate having a high dielectric constant are suitably used. In the case of a battery in which graphite is used as a negative electrode active material, ethylene carbonate is more preferred. Further, two or more kinds of these cyclic carbonates may be used as a mixture.

Specific examples of the cyclic carboxylic acid ester include: γ-butyrolactone and δ-valerolactone; and alkyl-substituted compounds thereof such as methyl-γ-butyrolactone, ethyl-γ-butyrolactone, and ethyl-δ-valerolactone.

The cyclic carboxylic acid ester has a low vapor pressure, a low viscosity, and a high dielectric constant, and is capable of reducing the viscosity of the resulting electrolytic solution without causing a decrease in the flash point of the electrolytic solution and the degree of dissociation of the electrolyte in the solution. Consequently, the use of the cyclic carboxylic acid ester provides a feature that the conductivity of the resulting electrolytic solution, which is an index related to the discharge characteristics of a battery, can be increased without causing an increase in inflammability of the electrolytic solution. Therefore, when it is intended to improve the flash point of the solvent, it is preferred to use a cyclic carboxylic acid ester as the cyclic aprotic solvent. Among the cyclic carboxylic acid esters, γ-butyrolactone is most preferred.

Further, the cyclic carboxylic acid ester is preferably used as a mixture with another cyclic aprotic solvent(s). Examples of such a mixture include a mixture of a cyclic carboxylic acid ester with a cyclic carbonate(s) and/or a linear carbonate(s).

Examples of the cyclic sulfone include sulfolane, 2-methylsulfolane, 3-methylsulfolane, dimethylsulfone, diethylsulfone, dipropylsulfone, methylethylsulfone, and methylpropylsulfone.

Examples of the cyclic ether include dioxolane.

### (Linear Aprotic Solvent)

As the linear aprotic solvent, it is possible to use a linear carbonate, a linear carboxylic acid ester, a linear ether, a linear phosphoric acid ester, and/or the like.

The mixing ratio of the linear aprotic solvent in the nonaqueous solvent is from 10% by mass to 100% by mass, more preferably from 20% by mass to 90% by mass, and particularly preferably from 30% by mass to 80% by mass.

Specific examples of the linear carbonate include dimethyl carbonate, methyl ethyl carbonate, diethyl carbonate, methyl propyl carbonate, methyl isopropyl carbonate, ethyl propyl carbonate, dipropyl carbonate, methyl butyl carbonate, ethyl butyl carbonate, dibutyl carbonate, methyl pentyl carbonate, ethyl pentyl carbonate, dipentyl carbonate, methyl heptyl carbonate, ethyl heptyl carbonate, diheptyl carbonate, methyl hexyl carbonate, ethyl hexyl carbonate, dihexyl carbonate, methyl octyl carbonate, ethyl octyl carbonate, dioctyl carbonate, and methyl trifluoroethyl carbonate. Two kinds or more of these linear carbonates may be used as a mixture.

Specific examples of the linear carboxylic acid ester include methyl pivalate.

Specific examples of the linear ether include dimethoxyethane.

Specific examples of the linear phosphoric acid ester include trimethyl phosphate.

### (Combination of Solvents)

The nonaqueous solvent to be used in the nonaqueous electrolytic solution according to the present disclosure may be used singly, or as a mixture of a plurality of kinds thereof. It is possible to use one kind or a plurality of kinds of the cyclic aprotic solvents only, one kind or a plurality of kinds of the linear aprotic solvents only, or a mixture of the cyclic aprotic solvent(s) and the linear aprotic solvent(s). When it is particularly intended to achieve improvements in load characteristics and low temperature properties of the resulting battery, a combination of the cyclic aprotic solvent(s) and the linear aprotic solvent(s) is preferably used as the nonaqueous solvent.

From the viewpoint of improving electrochemical stability of the electrolytic solution, it is most preferred to use a cyclic carbonate as the cyclic aprotic solvent, and a linear carbonate as the linear aprotic solvent. Further, the use of a combination of a cyclic carboxylic acid ester with a cyclic carbonate(s) and/or a linear carbonate(s) can also increase the conductivity of the electrolytic solution related to the charge-discharge characteristics of the resulting battery.

Specific examples of the combination of a cyclic carbonate(s) and a linear carbonate(s) include combinations of: ethylene carbonate and dimethyl carbonate; ethylene carbonate and methyl ethyl carbonate; ethylene carbonate and diethyl carbonate; propylene carbonate and dimethyl carbonate; propylene carbonate and methyl ethyl carbonate; propylene carbonate and diethyl carbonate; ethylene carbonate, propylene carbonate and methyl ethyl carbonate; ethylene carbonate, propylene carbonate and diethyl carbonate; ethylene carbonate, dimethyl carbonate and methyl ethyl carbonate; ethylene carbonate, dimethyl carbonate and diethyl carbonate; ethylene carbonate, methyl ethyl carbonate and diethyl carbonate; ethylene carbonate, dimethyl carbonate, methyl ethyl carbonate and diethyl carbonate; ethylene carbonate, propylene carbonate, dimethyl carbonate and methyl ethyl carbonate; ethylene carbonate, propylene carbonate, dimethyl carbonate and diethyl carbonate; ethylene carbonate, propylene carbonate, methyl ethyl carbonate and diethyl carbonate; and ethylene carbonate, propylene carbonate, dimethyl carbonate, methyl ethyl carbonate and diethyl carbonate.

The mixing ratio of the cyclic carbonate(s) and the linear carbonate(s) is preferably such that the mass ratio of the cyclic carbonate(s): the linear carbonate(s) is from 5:95 to 80:20, more preferably 10:90 to 70:30, and particularly preferably 15:85 to 55:45. When the mixing ratio is adjusted within the above described range, it is possible to prevent an increase in the viscosity of the electrolytic solution, and to increase the degree of dissociation of the electrolyte. As a result, the conductivity of the electrolytic solution related to the charge-discharge characteristics of the resulting battery can be increased. Further, the solubility of the electrolyte can further be increased. Accordingly, an electrolytic solution having an excellent electrical conductivity at room temperature or at a low temperature can be obtained, making it possible to improve the load characteristics of the resulting battery at a temperature of from room temperature to low temperature.

Specific examples of the combination of a cyclic carboxylic acid ester with a cyclic carbonate(s) and/or a linear carbonate(s) include combinations of: γ-butyrolactone and ethylene carbonate; γ-butyrolactone, ethylene carbonate and dimethyl carbonate; γ-butyrolactone, ethylene carbonate and methyl ethyl carbonate; γ-butyrolactone, ethylene carbonate and diethyl carbonate; γ-butyrolactone and propylene carbonate; γ-butyrolactone, propylene carbonate and dimethyl carbonate; γ-butyrolactone, propylene carbonate and methyl ethyl carbonate; γ-butyrolactone, propylene carbonate and diethyl carbonate; γ-butyrolactone, ethylene carbonate and propylene carbonate; γ-butyrolactone, ethylene carbonate, propylene carbonate and dimethyl carbonate; γ-butyrolactone, ethylene carbonate, propylene carbonate and methyl ethyl carbonate; γ-butyrolactone, ethylene carbonate, propylene carbonate and diethyl carbonate; γ-butyrolactone, ethylene carbonate, dimethyl carbonate and methyl ethyl carbonate; γ-butyrolactone, ethylene carbonate, dimethyl carbonate and diethyl carbonate; γ-butyrolactone, ethylene carbonate, methyl ethyl carbonate and diethyl carbonate; γ-butyrolactone, ethylene carbonate, dimethyl carbonate, methyl ethyl carbonate and diethyl carbonate; γ-butyrolactone, ethylene carbonate, propylene carbonate, dimethyl carbonate and methyl ethyl carbonate; γ-butyrolactone, ethylene carbonate, propylene carbonate, dimethyl carbonate and diethyl carbonate; γ-butyrolactone, ethylene carbonate, propylene carbonate, methyl ethyl carbonate and diethyl carbonate; γ-butyrolactone, ethylene carbonate, propylene carbonate, dimethyl carbonate, methyl ethyl carbonate and diethyl carbonate; γ-butyrolactone and sulfolane; γ-butyrolactone, ethylene carbonate and sulfolane; γ-butyrolactone, propylene carbonate and sulfolane; γ-butyrolactone, ethylene carbonate, propylene carbonate and sulfolane; and γ-butyrolactone, sulfolane and dimethyl carbonate.

### (Other Solvent)

Examples of the nonaqueous solvent also include solvents other than those mentioned above.

Specific examples of other solvents include: amides such as dimethylformamide; linear carbamates such as methyl-N,N-dimethyl carbamate; cyclic amides such as N-methylpyrrolidone; cyclic ureas such as N,N-dimethylimidazolidinone; boron compounds such as trimethyl borate, triethyl borate, tributyl borate, trioctyl borate, and trimethylsilyl borate; and polyethylene glycol derivatives represented by the following Formulae:

HO(CH₂CH₂O)ₐH

HO[CH₂CH(CH₃)O]_{b}H

CH₃O(CH₂CH₂O)_{c}H

CH₃O[CH₂CH(CH₃)O]_{d}H

CH₃O(CH₂CH₂O)ₑCH₃

CH₃O[CH₂CH(CH₃)O]_{f}CH₃

C₉H₁₉PhO(CH₂CH₂O)_{g}[CH(CH₃)O]ₕCH₃

(wherein Ph represents a phenyl group)

CH₃O[CH₂CH(CH₃)O]ᵢCO[OCH(CH₃)CH₂]ⱼOCH₃.

In the above described Formulae, each of a to f represents an integer from 5 to 250; each of g to j represents an integer from 2 to 249; and g to j satisfy 5 ≤ g + h ≤ 250 and 5 ≤ i + j ≤ 250.

The nonaqueous electrolytic solution according to the present disclosure is not only suitable as a nonaqueous electrolytic solution for a lithium secondary battery, but also can be used as a nonaqueous electrolytic solution for a primary battery, a nonaqueous electrolytic solution for a electrochemical capacitor, or an electrolytic solution for an electric double layer capacitor or for an aluminum electrolytic capacitor.

### [Lithium Secondary Battery]

A lithium secondary battery according to the present disclosure includes: a positive electrode; a negative electrode; and the nonaqueous electrolytic solution according to the present disclosure.

### (Negative Electrode)

The negative electrode may include a negative electrode active material and a negative electrode current collector.

As the negative electrode active material in the negative electrode, it is possible to use at least one selected from the group consisting of metallic lithium, a lithium-containing alloy, a metal or alloy capable of alloying with lithium, an oxide capable of doping and dedoping lithium ions, a transition metal nitride capable of doping and dedoping lithium ions, and a carbon material capable of doping and dedoping lithium ions (these may be used singly, or as a mixture containing two or more kinds thereof).

Examples of the metal or alloy capable of alloying with lithium (or with lithium ions) include silicon, silicon alloys, tin, and tin alloys. The metal or alloy may also be lithium titanate.

Among those mentioned above, a carbon material capable of doping and dedoping lithium ions is preferred. Such a carbon material may be, for example, carbon black, activated carbon, a graphite material (artificial graphite or natural graphite), or an amorphous carbon material. The carbon material may take any of fibrous, spherical, potato-like, and flake-like forms.

Specific examples of the amorphous carbon material include hard carbon, cokes, meso-carbon microbeads (MCMB) baked at 1500°C or lower, and mesophase pitch carbon fibers (MCF).

Examples of the graphite material include natural graphite and artificial graphite. Examples of the artificial graphite include graphitized MCMB and graphitized MCF. A graphite material containing boron, for example, can also be used as the graphite material. Further, it is also possible to use a graphite material coated with a metal such as gold, platinum, silver, copper or tin; a graphite material coated with amorphous carbon, or a mixture of amorphous carbon with graphite, as the graphite material.

These carbon materials may be used singly, or as a mixture of two or more kinds thereof. The carbon material is particularly preferably a carbon material whose interplanar spacing d(002) of (002) plane, as measured by an X-ray analysis, is 0.340 nm or less. Further, the carbon material is also preferably a graphite having a true density of 1.70 g/cm³ or more, or a highly crystalline carbon material having properties close thereto. The use of any of the carbon materials as described above enables further increase in the energy density of the resulting battery.

The material of the negative electrode current collector in the negative electrode is not particularly limited, and any of those conventionally known can be used arbitrarily.

Specific examples of the material of the negative electrode current collector include metallic materials such as copper, nickel, stainless steel and nickel plated steel. Among these, copper is particularly preferred from the viewpoint of processability.

### (Positive Electrode)

The positive electrode may include a positive electrode active material and a positive electrode current collector.

Examples of the positive electrode active material in the positive electrode include: transition metal oxides and transition metal sulfides such as MoS₂, TiS₂, MnO₂, and V₂O₅; composite oxides composed of lithium and transition metals such as LiCoO₂, LiMnO₂, LiMn₂O₄, LiNiO₂, LiNixCo_{(1-X)}O₂ [wherein 0 < X < 1], Li_{1 + α}Me_{1-α}O₂ (wherein Me represents any one of transition metal elements including Mn, Ni, and Co; and α satisfies 1.0 ≤ (1 + α)/(1-α) ≤ 1.6) having an α-NaFeO₂ type crystal structure, LiNiₓCo_{y}Mn_{z}O₂ [wherein x + y + z = 1; 0 < x < 1; 0 < y <1; and 0 < z < 1] (for example, LiNi_{0.33}Co_{0.33}Mn_{0.33}O₂, LiNi_{0.5}Co_{0.2}Mn_{0.3}O₂, etc.), LiFePO₄, and LiMnPO₄; and electrically conductive polymer materials such as polyaniline, polythiophene, polypyrrole, polyacetylene, polyacene, dimercaptothiadiazole, and polyaniline composites. Among these, composite oxides composed of lithium and transition metals are particularly preferred. In a case in which the negative electrode is made of lithium metal or a lithium alloy, a carbon material can also be used as the positive electrode. Further, a mixture of a composite oxide of lithium and a transition metal with a carbon material can also be used as the positive electrode.

The positive electrode active material may be used singly, or two or more kinds thereof may be used as a mixture. When the positive electrode active material has an insufficient electrical conductivity, an electrically conductive auxiliary may be used as a component of the positive electrode, along with the positive electrode active material. Examples of the electrically conductive auxiliary include carbon materials such as carbon black, amorphous whisker, and graphite.

The material of the positive electrode current collector in the positive electrode is not particularly limited, and any of those conventionally known can be used arbitrarily.

Specific examples of the material of the positive electrode current collector include: metallic materials such as aluminum, aluminum alloys, stainless steel, nickel, titanium, and tantalum; and carbon materials such as carbon cloth and carbon paper.

### (Separator)

The lithium secondary battery according to the present disclosure preferably includes a separator between the negative electrode and the positive electrode.

The separator is a membrane which electrically insulates the positive electrode and the negative electrode, and which allows lithium ions to permeate therethrough. Examples thereof include a porous membrane and a polymer electrolyte.

A microporous polymer film is suitably used as the porous membrane, and examples of the material thereof include polyolefin, polyimide, polyvinylidene fluoride, and polyester.

A porous polyolefin film is particularly preferred, and specific examples thereof include a porous polyethylene film, a porous polypropylene film, and a multilayer film of porous polyethylene film and polypropylene film. Another resin having an excellent thermal stability may be coated on the porous polyolefin film.

Examples of the polymer electrolyte include a polymer in which a lithium salt is dissolved, and a polymer swollen with an electrolytic solution.

The nonaqueous electrolytic solution according to the present disclosure may be used for the purpose of swelling a polymer to obtain a polymer electrolyte.

### (Configuration of Battery)

The lithium secondary battery according to the present disclosure can be configured to have any of various known shapes, and can be formed into a cylindrical shape, a coin shape, a rectangular shape, a laminate shape, a film shape, or any other arbitrary shape. However, the basic structure of the battery is the same regardless of the shape, and design modifications can be made depending on the purpose of the battery.

The lithium secondary battery according to the present disclosure (nonaqueous electrolytic solution secondary battery) may be, for example, a laminate type battery.

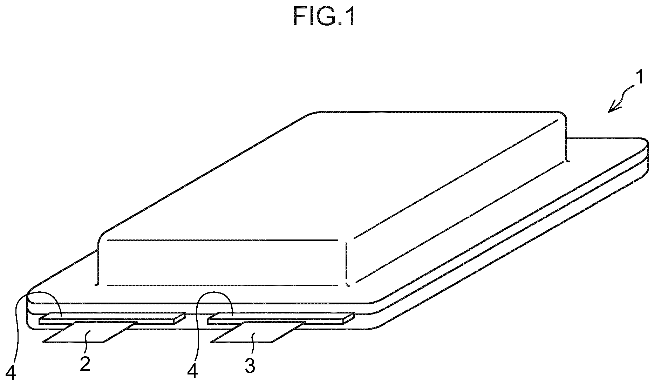

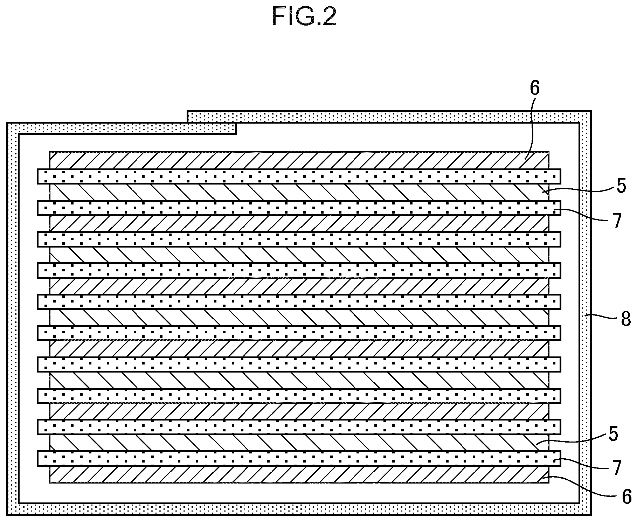

FIG. 1 is a schematic perspective view showing one example of a laminate type battery, which is one example of the lithium secondary battery according to the present disclosure; and FIG. 2 is a schematic sectional view in the thickness direction of a laminate type electrode body to be housed in the laminate type battery shown in FIG. 1.

The laminate type battery shown in FIG. 1 includes a laminate exterior body 1 which includes therein the nonaqueous electrolytic solution (not shown in FIG. 1) and the laminate type electrode body (not shown in FIG. 1), and whose interior is sealed by sealing a peripheral portion thereof. The laminate exterior body 1 to be used may be, for example, a laminate exterior body made of aluminum.

The laminate type electrode body to be housed in the laminate exterior body 1 include, as shown in FIG. 2: a laminated body in which positive electrode plates 5 and negative electrode plates 6 are alternately disposed one on another in layers, with separators 7 interposed therebetween; and a separator 8 surrounding the laminated body. The positive electrode plates 5, the negative electrode plates 6, the separators 7, and the separator 8 are impregnated with the nonaqueous electrolytic solution according to the present disclosure.

Each of a plurality of the positive electrode plates 5 in the laminate type electrode body is electrically connected to a positive electrode terminal 2 via a positive electrode tab (not shown), and a portion of the positive electrode terminal 2 is protruding outside the laminate exterior body 1 from the peripheral portion thereof (FIG. 1). The portion of the peripheral portion of the laminate exterior body 1 from which the positive electrode terminal 2 protrudes is sealed by an insulating seal 4.

In the same manner, each of a plurality of the negative electrode plates 6 in the laminate type electrode body is electrically connected to a negative electrode terminal 3 via a negative electrode tab (not shown), and a portion of the negative electrode terminal 3 is protruding outside the laminate exterior body 1 from the peripheral portion thereof (FIG. 1). The portion of the peripheral portion of the laminate exterior body 1 from which the negative electrode terminal 3 protrudes is sealed by another insulating seal 4.

Further, the laminate type battery according to the one example includes five pieces of the positive electrode plates 5 and six pieces of the negative electrode plates 6. In this battery, the positive electrode plates 5 and the negative electrode plates 6 are disposed one on another in layers, with the separators 7 respectively interposed therebetween, in such an arrangement that both outermost layers are the negative electrode plates 6. However, it goes without saying that the number of the positive electrode plates, the number of the negative electrode plates, and the arrangement of these electrodes, in the laminate type battery, are not limited to those in the one example, and that various modifications may be made.

Another example of the lithium secondary battery according to the present disclosure is a coin type battery.

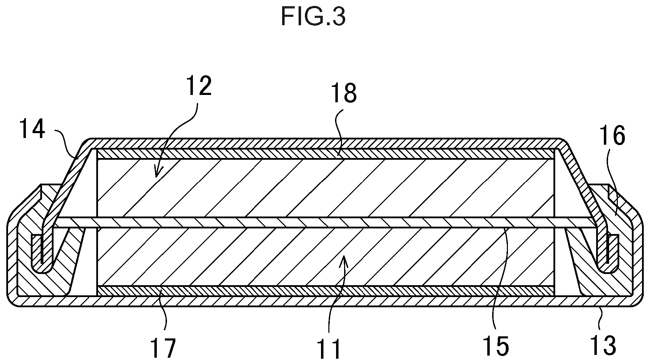

FIG. 3 is a schematic perspective view showing one example of a coin type battery, which is another example of the lithium secondary battery according to the present disclosure.

In the coin type battery shown in FIG. 3, a disk-like negative electrode 12; a separator 15 into which a nonaqueous electrolytic solution is injected; a disk-like positive electrode 11; and if necessary, spacer plates 17 and 18 made of stainless steel, aluminum, or the like; are layered in the order mentioned, and received, in this laminated state, between a positive electrode can 13 (hereinafter, also referred to as "battery can") and a sealing plate 14 (hereinafter, also referred to as "battery can lid"). The positive electrode can 13 and the sealing plate 14 are sealed by caulking via a gasket 16.

In this one example, the nonaqueous electrolytic solution according to the present disclosure is used as the nonaqueous electrolytic solution to be injected into the separator 15.

The lithium secondary battery according to the present disclosure may be a lithium secondary battery obtained by charging and discharging a lithium secondary battery (lithium secondary battery before being charged and discharged) including a negative electrode, a positive electrode, and the nonaqueous electrolytic solution according to the present disclosure.

In other words, the lithium secondary battery according to the present disclosure may be a lithium secondary battery (charged and discharged lithium secondary battery) produced by: preparing a lithium secondary battery before being charged and discharged, which includes a negative electrode, a positive electrode, and the nonaqueous electrolytic solution according to the present disclosure; and then charging and discharging the thus prepared lithium secondary battery before being charged and discharged, for one or more times.

The applications of the lithium secondary battery according to the present disclosure are not particularly limited, and the lithium secondary battery can be used in various known applications. The lithium secondary battery can be widely used in small-sized portable devices as well as large-sized products, such as, for example: laptop personal computers, mobile personal computers, mobile phones, headphone stereos, video/movie cameras, liquid crystal television sets, handy cleaners, electronic organizers, electronic calculators, radios, back-up power supply applications, motors, automobiles, electric cars, motorcycles, electric motorcycles, bicycles, electric bicycles, lighting devices, game machines, watches, electric tools, and cameras.

### EXAMPLES

Examples of the present disclosure will now be described. However, the present disclosure is in no way limited to the following Examples.

In the following Examples, the term "added amount" refers to the content of a component in a nonaqueous electrolytic solution to be finally obtained (namely, the amount of the component with respect to the total amount of the nonaqueous electrolytic solution to be finally obtained).

Further, "wt%" represents "% by mass".

### [Example 1]

A coin type battery (test battery) which was a lithium secondary battery was produced according to the following procedure.

### < Preparation of Negative Electrode >

98 parts by mass of natural graphite-based graphite, 1 part by mass of carboxymethyl cellulose, and 1 part by mass of SBR latex were kneaded with a water solvent, to prepare a negative electrode mixture slurry in the form of a paste.

Next, the thus obtained negative electrode mixture slurry was coated on a belt-like negative electrode current collector made of copper foil and having a thickness of 18 µm, followed by drying. Thereafter, the resultant was compressed with a roll press, to obtain a sheet-like negative electrode composed of the negative electrode current collector and a negative electrode active material layer. At this time, the resulting negative electrode active material layer had a coating density of 10 mg/cm², and a packing density of 1.5 g/ml.

### < Preparation of Positive Electrode >

96.5 parts by mass of LiNi_{0.5}Mn_{0.3}Co_{0.2}O₂, 2 parts by mass of acetylene black, and 1.5 parts by mass of polyvinylidene fluoride were kneaded with N-methylpyrrolidinone as a solvent, to prepare a positive electrode mixture slurry in the form of a paste.

Next, the thus obtained positive electrode mixture slurry was coated on a belt-like positive electrode current collector made of aluminum foil and having a thickness of 20 µm, followed by drying. Thereafter, the resultant was compressed with a roll press, to obtain a sheet-like positive electrode composed of the positive electrode current collector and a positive electrode active material layer. At this time, the resulting positive electrode active material layer had a coating density of 30 mg/cm², and a packing density of 2.7 g/ml.

### < Preparation of Nonaqueous Electrolytic Solution >

Ethylene carbonate (EC), dimethyl carbonate (DMC), and methyl ethyl carbonate (EMC), as nonaqueous solvents, were mixed at a ratio of 30:35:35 (in mass ratio), to obtain a mixed solvent.

LiPF₆ as an electrolyte was dissolved in the thus obtained mixed solvent, such that the concentration of the electrolyte in a nonaqueous electrolytic solution to be finally obtained was 1 mole /liter.

To the solution obtained as described above,
lithium trifluoromethanesulfonate (hereinafter, also referred to as "TFMSLi") (added amount: 0.5% by mass) as the additive A,
lithium difluorophosphate (hereinafter, also referred to as "LiDFP") (added amount: 1.0% by mass) as the additive B, and
lithium bis(oxalato)borate (hereinafter, also referred to as "LiBOB") (added amount: 0.5% by mass) as the additive C,
were added, to obtain a nonaqueous electrolytic solution.

### < Production of Coin Type Battery >

The negative electrode and the positive electrode prepared as described above were punched out into disks having diameters of 14 mm and 13 mm, respectively, to obtain coin-shaped electrodes (a coin-shaped negative electrode and a coin-shaped positive electrode). Further, a microporous polyethylene film having a thickness of 20 µm was punched out into a disk having a diameter of 17 mm, to obtain a separator.

The thus obtained coin-shaped negative electrode, separator, and coin-shaped positive electrode were disposed one on another in layers, in the order mentioned, within a battery can made of stainless steel (size 2032). 20 µl of the above prepared nonaqueous electrolytic solution was then injected into the battery can, so that the separator, the positive electrode, and the negative electrode were impregnated with the nonaqueous electrolytic solution.

Further, an aluminum plate (thickness: 1.2 mm, diameter: 16 mm) and a spring were placed on top of the positive electrode, and a battery can lid was caulked to the battery can via a gasket made of polypropylene, so as to seal a battery to be formed, thereby producing a coin type lithium secondary battery (hereinafter, referred to as "test battery") having a configuration shown in FIG. 3, and having a diameter of 20 mm and a height of 3.2 mm.

### [Evaluations]

The resulting coin type battery (test battery) was subjected to the following evaluations.

### < Direct Current Resistance before Storage (-20°C) >

The charging and discharging of the coin type battery was repeated three times at a constant voltage of 4.2 V, and then the battery was charged to a constant voltage of 3.9 V. Then the coin type battery after charging was cooled to -20°C in a thermostatic chamber. The coin type battery cooled to -20°C was discharged at -20°C at a constant current of 0.2 mA, and a decrease in potential during 10 seconds after the start of discharge was measured, to measure a direct current resistance [Ω] of the coin type battery. The resulting measured value was defined as the direct current resistance before storage (-20°C) (Ω).

The result is shown in Table 1.

### < Direct Current Resistance after Storage (-20°C) >

The coin type battery whose direct current resistance before storage (-20°C) had been measured was charged at a constant voltage of 4.25 V, and the charged coin type battery was stored in a thermostatic chamber controlled to 60°C for five days.

After storing for five days, the coin type battery was charged to a constant voltage of 3.9 V, and the coin type battery after charging was then cooled to -20°C in the thermostatic chamber. The coin type battery cooled to -20°C was discharged at -20°C at a constant current of 0.2 mA, and a decrease in potential during 10 seconds after the start of discharge was measured, to measure the direct current resistance [Ω] of the coin type battery. The resulting measured value was defined as the direct current resistance after storage (-20°C) (Ω).

The result is shown in Table 1.

### < Rate of Increase (%) in Direct Current Resistance Due to Storage >

The rate of increase (%) in direct current resistance due to storage was determined based on the direct current resistance before storage (-20°C) and the direct current resistance after storage (-20°C), and according to the following Equation.

The result is shown in Table 1.

Rate of increase (%) in direct current resistance due to storage = (direct current resistance after storage (-20°C) - direct current resistance before storage (-20°C) /direct current resistance before storage (-20°C)) × 100

There is a case in which the rate of increase (%) in direct current resistance due to storage (hereinafter, also simply referred to as "rate of increase") is a negative value.

It goes without saying that when the rate of increase (%) in direct current resistance due to storage is a negative value, it means that the direct current resistance is reduced due to storage.

### [Comparative Examples 1 to 3]

The same procedure as in Example 1 was repeated except that the types and the amounts of the additives were changed as shown in Table 1, in the preparation of the respective nonaqueous electrolytic solutions.

The results are shown in Table 1.

In Table 1, the description "-" in each of the columns of the respective additives means that the corresponding additive was not added (namely, the added amount was 0% by mass).

**[Table 1]**

| | Additives in nonaqueous electrolytic solution | | | Direct current resistance of battery (-20°C) | | |
|---|---|---|---|---|---|---|
| | Additive A (added amount) | Additive B (added amount) | Additive C (added amount) | Before storage (Ω) | After storage (Ω) | Rate of increase (%) |
| Comparative Example 1 | TFMSLi (0.5 wt%) | LiDFP (1.5 wt%) | - | 90.3 | 111.5 | 23 |
| Comparative Example 2 | TFMSLi (0.5 wt%) | - | LiBOB (1.5 wt%) | 223.5 | 169.6 | -24 |
| Comparative Example 3 | - | LiDFP (1.5 wt%) | LiBOB (0.5 wt%) | 112.7 | 109.8 | -3 |
| Example 1 | TFMSLi (0.5 wt%) | LiDFP (1.0 wt%) | LiBOB (0.5 wt%) | 109.9 | 108.0 | -2 |

As shown in Table 1, in the battery of Example 1, in which the nonaqueous electrolytic solution containing all of the additive A, the additive B, and the additive C was used, the direct current resistance after storage of the battery was reduced as compared to the batteries of Comparative Examples 1 to 3.

More specifically, in the battery of Comparative Example 1, in which the nonaqueous electrolytic solution not containing the additive C was used, the direct current resistance increased due to storage, despite having a low direct current resistance before storage, resulting in a high direct current resistance after storage.

In Example 1, it was possible to prevent an increase in the direct current resistance due to storage, by replacing the amount corresponding to 0.5 wt% of the additive B (1.5 wt%) in the Comparative Example 1, with the additive C. As a result, the direct current resistance after storage could further be reduced.

The battery of Comparative Example 2, in which the nonaqueous electrolytic solution not containing the additive B was used, exhibited a high direct current resistance both before and after storage.

In Example 1, it was possible to drastically reduce both the direct current resistance before storage and the direct current resistance after storage, by replacing the amount corresponding to 0.5 wt% of the additive C (1.5 wt%) in the Comparative Example 2, with the additive B. As a result, the direct current resistance after storage could further be reduced.

Further, in Example 1, it was possible to reduce both the direct current resistance before storage and the direct current resistance after storage, by replacing the amount corresponding to 0.5 wt% of the additive B (1.5 wt%) in Comparative Example 3, in which the nonaqueous electrolytic solution not containing the additive A was used, with the additive A. As a result, the direct current resistance after storage could further be reduced.

### [Example 101]

The same procedure as in Example 1 was repeated except that vinylene carbonate (hereinafter, also referred to as "VC") (added amount: 0.3% by mass) as the additive D was further added, in the preparation of the nonaqueous electrolytic solution. The results are shown in Table 2.

**[Table 2]**

| | Additives in nonaqueous electrolytic solution | | | | Direct current resistance of battery (-20°C) | | |
|---|---|---|---|---|---|---|---|
| | Additive A (added amount) | Additive B (added amount) | Additive C (added amount) | Additive D (added amount) | Before storage (Ω) | After storage (Ω) | Rate of increase (%) |
| Example 101 | TFMSLi (0.5 wt%) | LiDFP (1.0 wt%) | LiBOB (0.5 wt%) | VC (0.3 wt%) | 132.3 | 119.5 | -10 |

As shown in Table 2, although the battery of Example 101, in which the nonaqueous electrolytic solution containing additive D was used, exhibited a high direct current resistance before storage, it was possible to reduce the direct current resistance by storage. As a result, the direct current resistance after storage of the battery could be reduced to some extent. The effect of reducing the direct current resistance by storage is thought to be an effect obtained by the addition of the additive A, the additive B, and the additive C.

## Claims

1. A nonaqueous electrolytic solution for a battery, the solution comprising:
an additive A that is at least one selected from the group consisting of compounds represented by the following Formula (A): 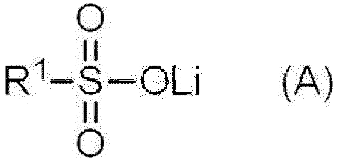
wherein, in Formula (A), R¹ represents a hydrocarbon group having from 1 to 6 carbon atoms and substituted with at least one fluorine atom;
an additive B that is lithium difluorophosphate;
an additive C that is at least one selected from the group consisting of compounds represented by the following Formula (C): 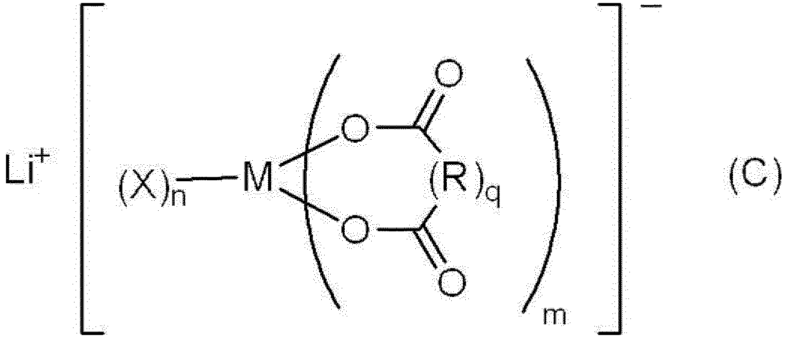
wherein, in Formula (C), M represents a boron atom or a phosphorus atom; each X represents a halogen atom; each R represents an alkylene group having from 1 to 10 carbon atoms or a halogenated alkylene group having from 1 to 10 carbon atoms which groups may contain a substituent or a hetero atom within their structure; m represents an integer from 1 to 3; n represents an integer from 0 to 4; and q represents 0 or 1; and
an electrolyte that is a lithium salt other than the additive A, the additive B, or the additive C, and wherein:
a content of the additive A is from 0.1% by mass to 2.0% by mass with respect to a total amount of the nonaqueous electrolytic solution for a battery;
a content of the additive B is from 0.1% by mass to 2.0% by mass with respect to the total amount of the nonaqueous electrolytic solution for a battery; and
a content of the additive C is from 0.1% by mass to 2.0% by mass with respect to the total amount of the nonaqueous electrolytic solution for a battery.

2. The nonaqueous electrolytic solution for a battery according to claim 1, wherein the additive C is at least one selected from the group consisting of compounds represented by the following Formula (C2): 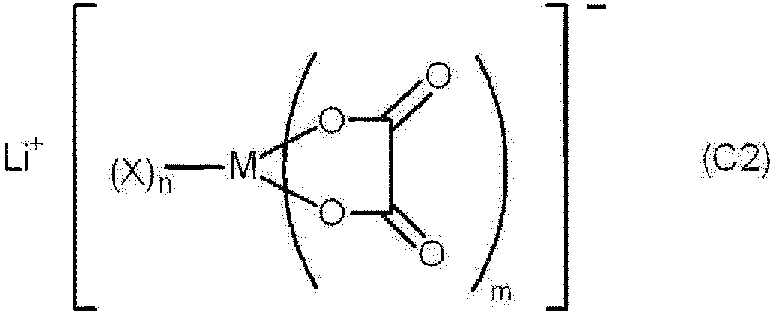 wherein, in Formula (C2), M represents a boron atom or a phosphorus atom; each X represents a halogen atom; m represents an integer from 1 to 3; and n represents an integer from 0 to 4.

3. The nonaqueous electrolytic solution for a battery according to claim 1 or 2, wherein the additive C is at least one selected from the group consisting of lithium bis(oxalato)borate and lithium difluoro(oxalato)borate.

4. The nonaqueous electrolytic solution for a battery according to any one of claims 1 to 3, wherein:
a ratio of a content mass of the additive A relative to a content mass of the additive B is from 0.1 to 2.0; and
a ratio of a content mass of the additive C relative to the content mass of the additive B is from 0.1 to 2.0.

5. The nonaqueous electrolytic solution for a battery according to any one of claims 1 to 4, further comprising an additive D that is at least one selected from the group consisting of compounds represented by the following Formula (D): 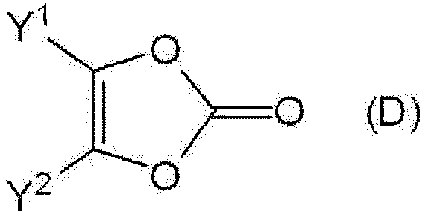 wherein, in Formula (D), each of Y¹ and Y² independently represents a hydrogen atom, a methyl group, an ethyl group, or a propyl group.

6. The nonaqueous electrolytic solution for a battery according to claim 5, wherein a content of the additive D is from 0.001% by mass to 10% by mass with respect to a total amount of the nonaqueous electrolytic solution for a battery.

7. The nonaqueous electrolytic solution for a battery according to any one of claims 1 to 6, wherein:
the electrolyte is at least one selected from the group consisting of LiPF₆, LiBF₄, LiClO₄, LiAsF₆, Li₂SiF₆, LiPFₙ[CₖF_{(2k + 1)}]₍₆₋ₙ₎, wherein n represents an integer from 1 to 5 and k represents an integer from 1 to 8, LiC(SO₂R²⁷)(SO₂R²⁸)(SO₂R²⁹), LiN(SO₂OR³⁰)(SO₂OR³¹), and LiN(SO₂R³²)(SO₂R³³), wherein R²⁷ to R³³ may be the same as, or different from, each other, and each represents a perfluoroalkyl group having from 1 to 8 carbon atoms.

8. The nonaqueous electrolytic solution for a battery according to claim 7, wherein the additive A includes at least one of lithium trifluoromethanesulfonate or lithium pentafluoroethanesulfonate.

9. The nonaqueous electrolytic solution for a battery according to claim 7 or 8, wherein:
the additive A includes lithium trifluoromethanesulfonate;
the additive C includes lithium bis(oxalato)borate; and
the electrolyte includes LiPF₆.

10. The nonaqueous electrolytic solution for a battery according to any one of claims 1 to 9, wherein:
a ratio of a content mass of the additive A relative to a content mass of the additive B is from 0.3 to 0.7; and
a ratio of a content mass of the additive C relative to the content mass of the additive B is from 0.3 to 0.7.

11. A lithium secondary battery, comprising:
a positive electrode;
a negative electrode containing, as a negative electrode active material, at least one selected from the group consisting of metallic lithium, a lithium-containing alloy, a metal or alloy capable of alloying with lithium, an oxide capable of doping and dedoping lithium ions, a transition metal nitride capable of doping and dedoping lithium ions, and a carbon material capable of doping and dedoping lithium ions; and
the nonaqueous electrolytic solution for a battery according to any one of claims 1 to 10.

12. A lithium secondary battery obtained by charging and discharging the lithium secondary battery according to claim 11.

## Patentansprüche

1. Nichtwässrige Elektrolytlösung für eine Batterie, wobei die Lösung umfasst:
ein Additiv A, das wenigstens eines ist, das aus der Gruppe ausgewählt wird, bestehend aus Verbindungen, die durch die folgende Formel (A) dargestellt werden: 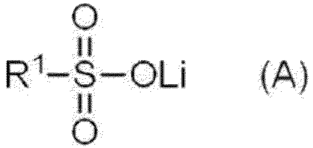
wobei in Formel (A) R¹ eine Kohlenwasserstoffgruppe mit 1 bis 6 Kohlenstoffatomen darstellt und mit wenigstens einem Fluoratom substituiert ist;
ein Additiv B, das Lithiumdifluorphosphat ist;
ein Additiv C, das wenigstens eines ist, das aus der Gruppe ausgewählt ist, die aus Verbindungen besteht, die durch die folgende Formel (C) dargestellt werden: 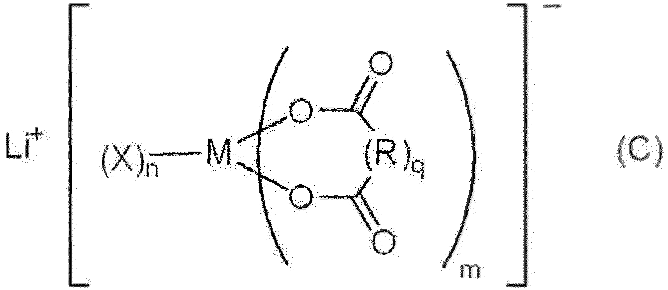
wobei in Formel (C) M ein Boratom oder ein Phosphoratom darstellt; jedes X ein Halogenatom darstellt; jedes R eine Alkylengruppe mit 1 bis 10 Kohlenstoffatomen oder eine halogenierte Alkylengruppe mit 1 bis 10 Kohlenstoffatomen darstellt, wobei diese Gruppen einen Substituenten oder ein Heteroatom in ihrer Struktur enthalten können; m eine ganze Zahl von 1 bis 3 darstellt; n eine ganze Zahl von 0 bis 4 darstellt; und q 0 oder 1 darstellt; und
einen Elektrolyten, der ein anderes Lithiumsalz als das Additiv A, das Additiv B oder das Additiv C ist, und wobei:
ein Gehalt des Additivs A 0,1 Massen-% bis 2,0 Massen-% bezogen auf die Gesamtmenge der nichtwässrigen Elektrolytlösung für eine Batterie beträgt;
ein Gehalt des Additivs B 0,1 Massen-% bis 2,0 Massen-% bezogen auf die Gesamtmenge der nichtwässrigen Elektrolytlösung für eine Batterie beträgt; und
ein Gehalt des Additivs C 0,1 Massen-% bis 2,0 Massen-% bezogen auf die Gesamtmenge der nichtwässrigen Elektrolytlösung für eine Batterie beträgt.

2. Nichtwässrige Elektrolytlösung für eine Batterie nach Anspruch 1, wobei das Additiv C wenigstens eines ist, das aus der Gruppe ausgewählt ist, die aus Verbindungen besteht, die durch die folgende Formel (C2) dargestellt werden: 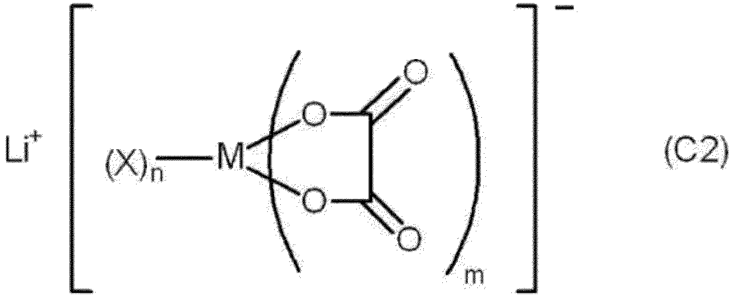 wobei in Formel (C2) M ein Boratom oder ein Phosphoratom darstellt; jedes X ein Halogenatom darstellt; m eine ganze Zahl von 1 bis 3 darstellt; und n eine ganze Zahl von 0 bis 4 darstellt.

3. Nichtwässrige Elektrolytlösung für eine Batterie nach Anspruch 1 oder 2, wobei das Additiv C wenigstens eines ist, das aus der Gruppe ausgewählt ist, die aus Lithium-bis(oxalato)borat und Lithium-difluor(oxalato)borat besteht.

4. Nichtwässrige Elektrolytlösung für eine Batterie nach einem der Ansprüche 1 bis 3, wobei:
ein Verhältnis einer Gehaltsmasse des Additivs A zu einer Gehaltsmasse des Additivs B 0,1 bis 2,0 beträgt; und
ein Verhältnis einer Gehaltsmasse des Additivs C zu der Gehaltsmasse des Additivs B 0,1 bis 2,0 beträgt.

5. Nichtwässrige Elektrolytlösung für eine Batterie nach einem der Ansprüche 1 bis 4, ferner umfassend ein Additiv D, das wenigstens eines ist, das aus der Gruppe ausgewählt ist, die aus Verbindungen besteht, die durch die folgende Formel (D) dargestellt sind: 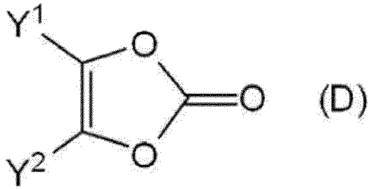 wobei in Formel (D) jedes von Y¹ und Y² unabhängig ein Wasserstoffatom, eine Methylgruppe, eine Ethylgruppe oder eine Propylgruppe darstellt.

6. Nichtwässrige Elektrolytlösung für eine Batterie nach Anspruch 5, wobei ein Gehalt des Additivs D von 0,001 Massen-% bis 10 Massen-% bezogen auf eine Gesamtmenge der nichtwässrigen Elektrolytlösung für eine Batterie beträgt.

7. Nichtwässrige Elektrolytlösung für eine Batterie nach einem der Ansprüche 1 bis 6, wobei:
der Elektrolyt wenigstens einer ist, der aus der Gruppe ausgewählt ist, die aus LiPF₆, LiBF₄, LiClO₄, LiAsF₆, Li₂SiF₆, LiPFₙ[CₖF(₂ₖ₊₁₎]₍₆₋ₙ₎ besteht, wobei n eine ganze Zahl von 1 bis 5 darstellt und k eine ganze Zahl von 1 bis 8 darstellt, LiC(SO₂R²⁷)(SO₂R²⁸)(SO₂R²⁹), LiN(SO₂OR³⁰)(SO₂OR³¹) und LiN(SO₂R³²)(SO₂R³³), wobei R²⁷ bis R³³ gleich oder verschieden voneinander sein können und jeweils eine Perfluoralkylgruppe mit 1 bis 8 Kohlenstoffatomen darstellen.

8. Nichtwässrige Elektrolytlösung für eine Batterie nach Anspruch 7, wobei das Additiv A wenigstens eines von Lithiumtrifluormethansulfonat oder Lithiumpentafluorethansulfonat beinhaltet.

9. Nichtwässrige Elektrolytlösung für eine Batterie nach Anspruch 7 oder 8, wobei:
das Additiv A Lithiumtrifluormethansulfonat beinhaltet;
das Additiv C Lithium-bis(oxalato)borat beinhaltet; und
der Elektrolyt LiPF₆ beinhaltet.

10. Nichtwässrige Elektrolytlösung für eine Batterie nach einem der Ansprüche 1 bis 9, wobei:
ein Verhältnis einer Gehaltsmasse des Additivs A zu der Gehaltsmasse des Additivs B 0,3 bis 0,7 beträgt; und
ein Verhältnis der Gehaltsmasse des Additivs C zu der Gehaltsmasse des Additivs B von 0,3 bis 0,7 beträgt.

11. Lithium-Sekundärbatterie, umfassend:
eine positive Elektrode;
eine negative Elektrode, die als aktives Material der negativen Elektrode wenigstens eines enthält, das aus der Gruppe ausgewählt ist, die aus metallischem Lithium, einer lithiumhaltigen Legierung, einem Metall oder einer Legierung, die/das mit Lithium legiert werden kann, einem Oxid, das Lithiumionen dotieren und entdotieren kann, einem Übergangsmetallnitrid, das Lithiumionen dotieren und entdotieren kann, und einem Kohlenstoffmaterial, das Lithiumionen dotieren und entdotieren kann, besteht; und
die nichtwässrige Elektrolytlösung für eine Batterie nach einem der Ansprüche 1 bis 10.

12. Lithium-Sekundärbatterie, die durch Laden und Entladen der Lithium-Sekundärbatterie Batterie nach Anspruch 11 erhalten wird.

## Revendications

1. Solution électrolytique non aqueuse pour batterie, ladite solution comprenant :
un additif A consistant en au moins un additif choisi dans le groupe constitué par les composés représentés par la formule (A) suivante : 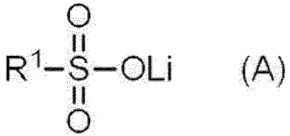
dans laquelle formule (A), R¹ représente un groupe hydrocarboné ayant de 1 à 6 atomes de carbone et substitué par au moins un atome de fluor ;
un additif B consistant en le difluorophosphate de lithium ;
un additif C consistant en au moins un additif choisi dans le groupe constitué par les composés représentés par la formule (C) suivante : 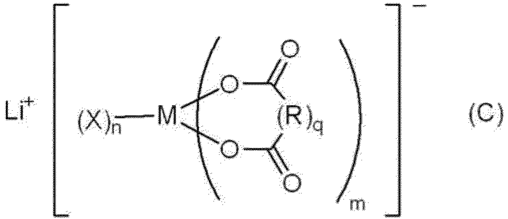
dans laquelle formule (C), M représente un atome de bore ou un atome de phosphore, chaque X représente un atome d'halogène, chaque R représente un groupe alkylène ayant de 1 à 10 atomes de carbone ou un groupe alkylène halogéné ayant de 1 à 10 atomes de carbone, lesquels groupes peuvent contenir un substituant ou un hétéroatome au sein de leur structure, m représente un nombre entier de 1 à 3, n représente un nombre entier de 0 à 4, et q représente 0 ou 1 ; et
un électrolyte consistant en un sel de lithium autre que l'additif A, l'additif B ou l'additif C ; et dans lequel :
la teneur en additif A va de 0,1 % en masse à 2,0 % en masse par rapport à la quantité totale de solution électrolytique non aqueuse pour batterie,
la teneur en additif B va de 0,1 % en masse à 2,0 % en masse par rapport à la quantité totale de solution électrolytique non aqueuse batterie, et
la teneur en additif C va de 0,1 % en masse à 2,0 % en masse par rapport à la quantité totale de solution électrolytique non aqueuse pour batterie.

2. Solution électrolytique non aqueuse pour batterie selon la revendication 1, dans laquelle l'additif C consiste en au moins un additif choisi dans le groupe constitué par les composés représentés par la formule (C2) suivante : 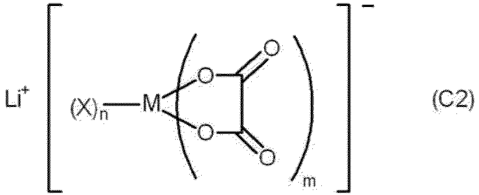 dans laquelle formule (C2), M représente un atome de bore ou un atome de phosphore, chaque X représente un atome d'halogène, m représente un nombre entier de 1 à 3, et n représente un nombre entier de 0 à 4.

3. Solution électrolytique non aqueuse pour batterie selon la revendication 1 ou 2, dans laquelle l'additif C consiste en le bis(oxalato)borate de lithium ou le difluoro(oxalato)borate de lithium.

4. Solution électrolytique non aqueuse pour batterie selon l'une quelconque des revendications 1 à 3, dans laquelle :
le rapport massique de la teneur en additif A sur la teneur en additif B va de 0,1 à 2,0, et
un rapport massique de la teneur en additif C sur la teneur en additif B va de 0,1 à 2,0.

5. Solution électrolytique non aqueuse pour batterie selon l'une quelconque des revendications 1 à 4, comprenant en outre un additif D consistant en au moins un additif choisi dans le groupe constitué par les composés représentés par la formule (D) suivante : 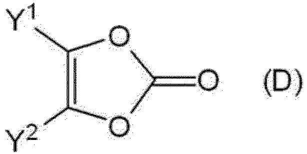 dans laquelle formule (D), Y¹ et Y² représentent chacun indépendamment un atome d'hydrogène, un groupe méthyle, un groupe éthyle ou un groupe propyle.

6. Solution électrolytique non aqueuse pour batterie selon la revendication 5, dans laquelle la teneur en additif D va de 0,001 % en masse à 10 % en masse par rapport à la quantité totale de solution électrolytique non aqueuse pour batterie.

7. Solution électrolytique non aqueuse pour batterie selon l'une quelconque des revendications 1 à 6, dans laquelle :
l'électrolyte est au moins un électrolyte choisi dans le groupe constitué par LiPF₆, LiBF₄, LiClO₄, LiAsF₆, Li₂SiF₆, LiPFₙ[CₖF₍₂ₖ₊₁₎]₍₆₋ₙ₎, où n représente un nombre entier de 1 à 5 et k représente un nombre entier de 1 à 8, LiC(SO₂R²⁷)(SO₂R²⁸)(SO₂R²⁹), LiN(SO₂OR³⁰)(SO₂OR³¹) et LiN(SO₂R³²)(SO₂R³³), où R²⁷ à R³³ peuvent être identiques ou différents les uns des autres, et représentent chacun un groupe perfluoroalkyle ayant de 1 à 8 atomes de carbone.

8. Solution électrolytique non aqueuse pour batterie selon la revendication 7, dans laquelle l'additif A comprend au moins du trifluorométhanesulfonate de lithium ou du pentafluoroéthanesulfonate de lithium.

9. Solution électrolytique non aqueuse pour batterie selon la revendication 7 ou 8, dans laquelle :
l'additif A comprend du trifluorométhanesulfonate de lithium,
l'additif C comprend du bis(oxalato)borate de lithium, et
l'électrolyte comprend du LiPF₆.

10. Solution électrolytique non aqueuse pour batterie selon l'une quelconque des revendications 1 à 9, dans laquelle :
le rapport massique de la teneur en additif A sur la teneur en additif B va de 0,3 à 0,7, et
le rapport massique de la teneur en additif C sur la teneur en additif B va de 0,3 à 0,7.

11. Batterie secondaire au lithium, comprenant :
une électrode positive,
une électrode négative contenant, en tant que matériau actif d'électrode négative, au moins un matériau choisi dans le groupe constitué par le lithium métallique, un alliage contenant du lithium, un métal ou un alliage pouvant s'allier avec le lithium, un oxyde pouvant doper et dédoper les ions lithium, un nitrure de métal de transition pouvant doper et dédoper les ions lithium, et un matériau carboné pouvant doper et dédoper les ions lithium, et
la solution électrolytique non aqueuse pour batterie selon l'une quelconque des revendications 1 à 10.

12. Batterie secondaire au lithium obtenue par charge et décharge de la batterie secondaire au lithium selon la revendication 11.
